# FASCICULE DE BREVET EUROPEEN

(11) **EP 0 602 099 B1**
(45) Date de publication et mention de la délivrance du brevet: **29.01.1997**
(21) Numéro de dépôt: 92918339.0
(22) Date de dépôt: 04.09.1992
(51) Int. Cl.: A23L 1/333, A23B 4/06, A23B 4/005

(54) **PROCEDE DE PRODUCTION DE PLATS DE FRUITS DE MER PASTEURISES**
VERFAHREN ZUR HERSTELLUNG VON MEERESFRUCHT-GERICHTEN
METHOD FOR PRODUCING PASTEURIZED SEAFOOD DISHES

(30) Priorité: 06.09.1991 BE 9100830
(43) Date de publication de la demande: 22.06.1994
(73) Titulaire: MARIDEL S.A., 4040 Herstal (BE)
(72) Inventeur: AOUN, Ben Tahieb Boubaker, 4000 Liège (BE)
(74) Mandataire: Vanderperre, Robert
(86) Numéro de dépôt international: BE9200038
(87) Numéro de publication internationale: WO9304600

(56) Documents cités:
- EP-A- 0 114 546
- EP-A- 0 242 183
- FR-A- 2 326 869
- PATENT ABSTRACTS OF JAPAN vol. 14, no. 068 (C-686)8 Février 1990

## Description

La présente invention concerne un procédé de production industrielle de plats de fruits de mer pasteurisés conditionnés pour la distribution et la conservation.

Une application particulière du procédé concerne la production de plats préparés de mollusques du type bivalve et de crustacés, et l'on peut citer notamment un plat de moules préparées suivant la recette dite moules "marinière" ou encore moules "casserole" c'est-à-dire des moules préparées avec différents légumes coupés en morceaux et éventuellement aromatisés.

La préparation de moules "marinière" nécessite des produits frais tels que moules, légumes, beurre et aromates, notamment, et demande un certain temps et un savoir-faire afin que les moules soient bien ouvertes, que leur chair reste moelleuse et conserve son arôme et que les légumes soient cuits à point.

Pour faciliter la distribution de fruits de mer, on connaît déjà des moules précuites surgelées dans un conditionnement hermétique. Si des mollusques surgelés peuvent être conservés, les produits n'ont cependant pas la saveur des mollusques frais car au cours des opérations de cuisson et de surgélation successives, la chair des mollusques subit déjà deux fois une modification de structure. La cuisson ultérieure avant la consommation produit une nouvelle fois une modification de structure qui rend finalement la chair peu moelleuse et lui fait perdre une grande partie de son arôme.

### Résumé de l'invention

La présente invention a pour but de remédier à cet inconvénient des produits de mer surgelés.

Elle a donc pour objet un procédé qui permet de livrer et de conserver des fruits de mer qui, au moment de leur consommation, ont l'aspect, la saveur et l'arôme des fruits de mer frais.

L'invention a également pour objet un procédé de production de plats de fruits de mer frais déjà préparés avec leur accompagnement culinaire, par exemple les ingrédients nécessaires pour servir des moules "marinière", de manière à éviter au restaurateur ou au consommateur une préparation longue et un grand savoir-faire culinaire.

Ces objectifs sont atteints conformément à l'invention par un procédé de traitement de fruits de mer et de production industrielle d'un plat de fruits de mer précuits sous conditionnement hermétique sous vide partiel tel que défini dans la revendication 1 et dans les revendications dépendantes 2 et 3.

Conformément à un second aspect de l'invention, il est proposé une installation industrielle pour la mise en oeuvre du procédé selon la présente invention. Cette installation est définie dans les revendications 4 à 8.

Grâce à l'invention qui permet de produire des plats de fruits de mer frais pasteurisés sous vide partiel et tout préparés, le consommateur peut se procurer des plats prêts qu'il lui suffit de réchauffer pour être très rapidement prêts à être consommés et qui ont toute la saveur et tout l'arôme des produits frais. Dans le cas particulier de la préparation de moules "marinière", le consommateur peut, après quelques minutes seulement de réchauffage, consommer des moules dont la chair est moelleuse et savoureuse accompagnées de légumes cuits à point et ayant leur coloration naturelle conservant ainsi au plat l'arôme des produits frais.

D'autres aspects et avantages de l'invention ressortiront de la description qui suit accompagnée de dessins.

### Brève description des dessins

La figure 1 est une représentation schématique d'un exemple de réalisation d'une installation mettant en oeuvre le procédé selon l'invention.

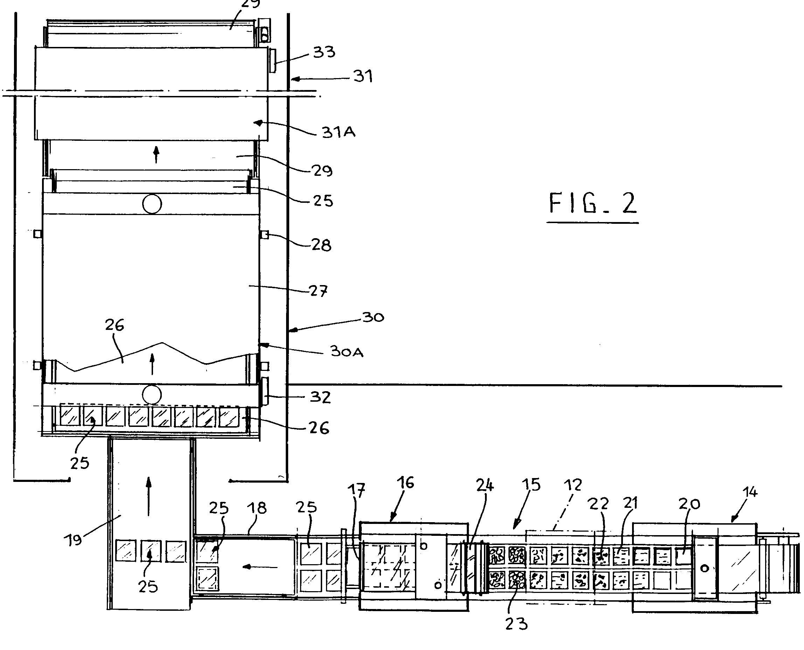

La figure 2 est une vue de dessus d'une partie de l'installation de la figure 1.

### Description d'un mode de réalisation

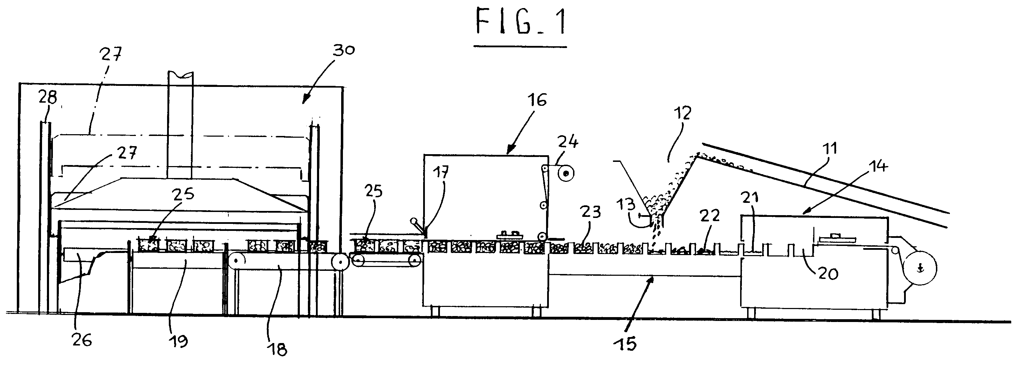

Le procédé selon l'invention va être décrit dans son application à la production de moules "marinière" en se référant à la figure 1.

Les légumes préalablement coupés et nettoyés ainsi que les moules fraîches sont placés dans des chambres froides respectives puis les moules sont débarrassées du reste de leurs byssus et des balanes fixés sur leurs coquilles. Elles sont ensuite acheminées par un tapis transporteur 11 vers un réservoir 12 en acier inoxydable qui les déverse dans un doseur 13 agence pour délivrer une quantité prédéterminée de moules (par exemple 750 g) qui tombent dans des récipients 20 amenés successivement sous le doseur.

Dans l'exemple décrit, les récipients sont constitués d'une feuille de matière plastique transparente défilant dans une thermoformeuse 15 agencée pour former des godets ou raviers et les présenter sous le doseur. Dans les raviers présentés sous le doseur a été introduite une quantité donnée d'eau 21, un peu de matière grasse (par exemple du beurre), des aromates et des légumes coupés en morceaux 22. L'introduction d'eau se fait par exemple en 14. Cet apport d'eau jouera un rôle capital au cours de l'opération de chauffage ultérieure, comme on le verra plus loin.

Dans les récipients sont par exemple versé 350 g de légumes coupés en morceaux, d'eau et d'aromates ainsi que 750 g de moules. L'air est ensuite éliminé des récipients et, de préférence, un gaz neutre s'y trouve injecté en 16 (par exemple de l'aligal produit par la firme L'Air Liquide) avant que les récipients soient soudés hermétiquement à l'aide d'une feuille de matière plastique 24 pour former des sachets scellés 25, de 17x17x8 cm environ par exemple, contenant tous les ingrédients du plat produit, en l'occurrence des moules marinières. L'injection de gaz est avantageuse pour éviter que les sachets ne s'écrasent et n'entravent le processus d'ouverture des coquilles lors de l'opération de chauffage qui suit.

Les sachets scellés 25 sont séparés l'un de l'autre par des moyens de coupe 17 puis contrôlés avant d'être amenés par les bandes 18 et 19 jusqu'à un tapis transporteur 26 agencé pour traverser un tunnel de pasteurisation 30 à une vitesse régulière contrôlée. Le chapeau 27 du tunnel de pasteurisation est monté de manière à coulisser le long de colonnes verticales 28. Le tunnel de pasteurisation 30 est par exemple agencé pour recevoir et faire circuler de la vapeur à une température soigneusement contrôlée par un ordinateur de contrôle 32. Sur le tapis transporteur 26, les sachets scellés 25 sont avantageusement disposés par rangées successives avec un certain écartement entre eux afin d'assurer une bonne circulation de la vapeur de chauffage entre les sachets.

La production de vapeur et la température à l'intérieur du tunnel de pasteurisation 30 sont réglées par l'ordinateur de contrôle en fonction de la vitesse de défilement du tapis transporteur et de la longueur du tunnel. Dans l'exemple décrit, le tunnel de pasteurisation a une longueur de 8 m et le tapis transporteur défile à une vitesse de 10,50 m à l'heure. Dans la partie antérieure 30A du tunnel 30, la température est avantageusement réglée à une valeur de 87°C. Le lent déplacement du tapis dans la vapeur à cette température permet aux moules contenues dans les sachets scellés 25 de s'ouvrir. La quantité de liquide contenue dans chaque sachet scellé joue un rôle très important : conjointement à la température de chauffage, les coquilles des moules s'ouvrent, les moules se détachent de leurs coquilles et restent attachées uniquement à leur muscle adducteur tandis que le liquide assure la réhydratation des coquilles de manière à éviter que la chair des moules ne colle à la nacre des coquilles. La première partie du tunnel de pasteurisation est ainsi traversée par les sachets en vingt minutes environ.

Dans la seconde partie du tunnel de pasteurisation 30, la température est avantageusement réglée à une valeur légèrement inférieure à la température régnant dans la première partie du tunnel, par exemple 85°C environ. Durant la traversée de cette seconde partie du tunnel de pasteurisation, le liquide contenu dans les sachets continue à réhydrater les coquilles. A la sortie du tunnel de pasteurisation, les moules sont bien ouvertes tandis que les légumes sont cuits à point et ont conservé leur coloration naturelle.

A leur sortie du tunnel de pasteurisation 30, les sachets scellés sont acheminés vers un tunnel de refroidissement 31 que traverse en longueur un tapis transporteur 29 qui prolonge le tapis transporteur 26 du tunnel de pasteurisation. Le tunnel de refroidissement 31 est agencé pour souffler un courant d'air froid à -12°C par exemple dans la partie antérieure 31A du tunnel de manière à soumettre les sachets scellés, qui sont à une température d'environ 85°C, a un choc thermique dû à la forte différence de température. Ce choc thermique amène rapidement les sachets scellés à une température comprise entre 35° et 40°C environ, ce qui assure une stabilisation des propriétés naturelles des ingrédients.

Dans la seconde partie du tunnel de refroidissement est soufflé un courant d'air froid à une température de -8°C environ. A la sortie du tunnel de refroidissement 31, les sachets scellés sont à une température à coeur basse certes, mais positive de l'ordre de +7°C à +8°C. La température dans le tunnel de refroidissement 31 est contrôlée par un ordinateur de contrôle 33.

On observe que, à la sortie du tunnel de refroidissement les légumes ont conservé leur coloration naturelle et que les sa-chets scellés ont repris leur forme initiale, c'est-à-dire leur forme comme lors de la première opération de fermeture avant pasteurisation.

Les sachets scellés sortant du tunnel de refroidissement sont placés dans des casiers ajourés assurant une bonne circulation d'air et stockés dans une chambre froide où est maintenue une basse température positive, par exemple +1°C, avant d'être emballés et expédiés pour la distribution. Les sachets scellés pasteurisés peuvent être conservés jusqu'à vingt jours environ sans altération aucune.

Lors de la consommation, afin de préserver le caractère traditionnel de la moule "marinière", il suffit de verser le contenu du sachet dans une casserolle et le porter à ébullition pendant 1 minute environ pour pouvoir consommer, sans autre préparation, des moules fraîches à chair moelleuse et savoureuse, accompagnées de légumes cuits à point et ayant conservé leur coloration naturelle et leur arôme naturel.

L'exemple décrit dans ce qui précède est donné à titre illustratif.

## Revendications

1. Procédé de production industrielle de plats de fruits de mer frais pasteurisés sous conditionnement hermétique, caractérisé par les étapes suivantes :
(a) les fruits de mer frais nettoyés et des légumes frais nettoyés et coupés en morceaux sont versés dans un récipient de conditionnement avec une quantité d'eau et éventuellement des aromates, et l'air contenu dans le récipient est partiellement éliminé avant que le récipient soit scellé hermétiquement,
(b) le récipient scellé est soumis à une opération de pasteurisation par déplacement d'un tapis à une vitesse prédéterminée à l'intérieur d'un tunnel de pasteurisation dans lequel circule de la vapeur à température contrôlée, la température de la vapeur dans une première partie du tunnel de pasteurisation étant réglée à une première valeur prédéterminée et la température de la vapeur dans une seconde partie dudit tunnel de pasteurisation étant réglée à une deuxième valeur prédéterminée, inférieure à ladite première température, de manière que les fruits de mer s'ouvrent et soient pasteurisés et que les légumes soient cuits à point,
(c) le récipient scellé et pasteurisé est ensuite soumis à une opération de refroidissement rapide en deux phases successives : d'abord par déplacement d'un tapis à une vitesse prédéterminée dans un premier courant d'air froid ayant une première température et ensuite par déplacement dans un deuxième courant d'air froid ayant une seconde température supérieure à la première température,
(d) le plat frais pasteurisé est délivré à une température basse supérieure à 0°C.

2. Procédé selon la revendication 1, caractérisé en ce que l'air éliminé du récipient est remplacé par un gaz neutre.

3. Procédé selon l'une quelconque des revendications précédentes, caractérisé en ce que, comme récipient, on utilise un sachet thermoformé en matière plastique.

4. Installation pour la mise en oeuvre du procédé selon l'une des revendications 1 et 2, caractérisée en ce qu'elle comprend une chaîne transporteuse pour faire défiler des récipients en matière plastique pour recevoir une quantité prédéterminée de fruits de mer, d'ingrédients d'accompagnement et d'eau,
des moyens pour éliminer partiellement l'air de chaque récipient, éventuellement y injecter un gaz neutre et le fermer hermétiquement,
un tunnel de pasteurisation traversé par un tapis transporteur et comportant deux parties consécutives, chaque pàrtie étant agencée pour y faire circuler de la vapeur,
des moyens pour régler la température individuellement dans chacune des deux parties consécutives du tunnel de pasteurisation,
un tunnel de refroidissement traversé par un tapis transporteur et comportant deux parties consécutives, chaque partie étant agencée pour y faire circuler un courant d'air froid, et
des moyens pour régler la température individuellement dans chacune des deux parties consécutives du tunnel de refroidissement.

5. Installation suivant la revendication 4, caractérisée en ce que le tapis transporteur est constitué de plusieurs tronçons successifs défilant à une même vitesse.

6. Plat préparé de fruits de mer pasteurisés obtenu par le procédé suivant l'une des revendications 1 à 3.

7. Plat préparé de mollusques du type bivalve pasteurisés obtenu par le procédé suivant l'une des revendications 1 à 3.

8. Plat préparé de moules marinières pasteurisées obtenu par le procédé suivant l'une des revendications 1 à 3.

## Claims

1. A process for the industrial production of pasteurized fresh seafood dishes under hermetic packaging, which comprises the following stages:
(a) the fresh cleaned seafoods and fresh, cleaned and chopped vegetables are poured into a packaging receptacle with an amount of water and optionally seasoning, and the air contained in the receptacle is partially removed before the receptacle is hermetically sealed,
(b) the sealed receptacle is subjected to a pasteurization operation by moving a belt at a predetermined speed inside a pasteurization tunnel in which steam circulates at a controlled temperature, the temperature of the steam in a first part of the pasteurization tunnel being regulated at a first predetermined value and the temperature of the steam in a second part of the said pasteurization tunnel being regulated at a second predetermined value, less than the said first temperature, so that the seafoods open and are pasteurized and that the vegetables are done to a turn,
(c) the sealed and pasteurized receptacle is then subjected to a rapid cooling operation in two successive phases: first by moving a belt at a predetermined speed in a first stream of cold air having a first temperature and then by moving in a second stream of cold air having a second temperature, greater than the first temperature,
(d) the fresh pasteurized dish emerges at a low temperature greater than 0°C.

2. The process as claimed in claim 1, wherein the air removed from the receptacle is replaced by a neutral gas.

3. The process as claimed in either of the preceding claims, wherein a thermoformed plastic container is used as receptacle.

4. A plant for the implementation of the process as claimed in claim 1 and 2, which comprises a conveyor belt for moving plastic receptacles in order to receive a predetermined amount of seafoods, accompanying ingredients and water,
means for partially removing the air from each receptacle, optionally injecting a neutral gas therein and hermetically closing it,
a pasteurization tunnel through which a conveyor belt passes and which contains two consecutive parts, each part being arranged for steam to circulate therein,
means for regulating the temperature individually in each of the two consecutive parts of the pasteurization tunnel,
a cooling tunnel through which a conveyor belt passes and which contains two consecutive parts, each part being arranged for a stream of cold air to circulate therein, and
means for regulating the temperature individually in each of the two consecutive parts of the cooling tunnel.

5. The plant as claimed in claim 4, wherein the conveyor belt consists of a number of successive sections moving at the same speed.

6. A prepared dish containing pasteurized seafoods obtained by the process as claimed in one of claims 1 to 3.

7. A prepared dish containing pasteurized bivalve molluscs obtained by the process as claimed in one of claims 1 to 3.

8. A prepared dish containing pasteurized moules marinières obtained by the process as claimed in one of claims 1 to 3.

## Patentansprüche

1. Verfahren zur industriellen Herstellung von frischen, pasteurisierten Meeresfruchtgerichten unter hermetisch verschlossenen Bedingungen, gekennzeichnet durch folgende Schritte:
a) die frischen gereinigten Meeresfrüchte und frisches gereinigtes und in Stücke geschnittenes Gemüse werden zusammen mit einem Anteil Wasser und gegebenenfalls Aromastoffen in einen Aufbereitungsbehälter geschüttet, und die in dem Behälter enthaltene Luft wird teilweise beseitigt, bevor der Behälter hermetisch versiegelt wird;
b) der versiegelte Behälter wird einer Pasteurisiereinwirkung unterworfen, indem ein Band mit vorbestimmter Geschwindigkeit im Inneren eines Pasteurisiertunnels verschoben wird, in welchem Dampf mit geregelter Temperatur umläuft, wobei die Dampftemperatur in einem ersten Abschnitt des Pasteurisiertunnels auf einen ersten vorbestimmten Wert und die Dampftemperatur in einem zweiten Abschnitt des Pasteurisiertunnels auf einen zweiten vorbestimmten Wert eingeregelt werden, der niedriger als die erste vorbestimmte Temperatur ist, in der Weise, daß sich die Meeresfrüchte öffnen und pasteurisiert werden und daß das Gemüse mit Biß gegart ist;
c) der dicht verschlossene und pasteurisierte Behälter wird anschließend einer raschen Kühleinwirkung in zwei aufeinander folgenden Schritten unterworfen: zunächst durch Verschiebung eines Bandes mit vorbestimmter Geschwindigkeit in einen ersten kalten Luftstrom mit einer ersten Temperatur und anschließend durch Verschiebung in einen zweiten Luftstrom mit einer zweiten höheren Temperatur im Vergleich zur ersten Temperatur;
d) das frische pasteurisierte Gericht wird mit einer niedrigen Temperatur oberhalb von 0°C abgeliefert.

2. Verfahren nach Anspruch 1,
dadurch gekennzeichnet, daß die aus dem Behälter entfernte Luft durch ein neutrales Gas ersetzt wird.

3. Verfahren nach einem der vorhergehenden Ansprüche,
dadurch gekennzeichnet, daß als Behälter ein warm verformter Beutel aus Kunststoff verwendet wird.

4. Einrichtung zur Durchführung des Verfahrens nach einem der Ansprüche 1 und 2,
gekennzeichnet durch folgende Merkmale:
eine Transportkette zum Entlangführen von Kunststoffbehältern zur Aufnahme einer vorbestimmten Menge von Meeresfrüchten, begleitenden Ingredienzien und Wasser,
Einrichtungen zum teilweisen Entfernen von Luft aus jedem Behälter, gegebenenfalls zum Einbringen eines neutralen Gases und zum hermetischen Schließen des Behälters,
ein Pasteurisiertunnel, der von einem Transportband durchquert wird und zwei aufeinanderfolgende Abschnitte aufweist, wobei jeder Abschnitt dahingehend betrieben wird, daß Wasserdampf darin umlaufen gelassen wird, Einrichtungen zur individuellen Regelung der Temperatur in jedem der beiden aufeinanderfolgenden Abschnitte des Pasteurisiertunnels,
ein Kühltunnel, der von einem Transportband durchquert wird und zwei aufeinanderfolgende Abschnitte aufweist, wobei jeder Abschnitt dahingehend betrieben wird, daß darin ein kalter Luftstrom umlaufen gelassen wird, und Einrichtungen zur individuellen Regelung der Temperatur in jedem der beiden aufeinanderfolgenden Abschnitte des Kühltunnels.

5. Einrichtung nach Anspruch 4,
dadurch gekennzeichnet, daß das Transportband aus mehreren aufeinanderfolgenden Stücken besteht, die mit gleicher Geschwindigkeit entlanggeführt werden.

6. Aus pasteurisierten Meeresfrüchten hergestelltes Gericht, das nach dem Verfahren der Ansprüche 1 bis 3 erhalten worden ist.

7. Aus pasteurisierten zweischaligen Weichtieren hergestelltes Gericht, das gemäß einem der Ansprüche 1 bis 3 erhalten worden ist.

8. Aus pasteurisierten, im Saft gegarten Muscheln hergestelltes Gericht, das gemäß einem der Ansprüche 1 bis 3 erhalten worden ist.
